# FASCICULE DE BREVET EUROPEEN

(11) **EP 2 576 001 B1**
(45) Date de publication et mention de la délivrance du brevet: **27.09.2017**
(21) Numéro de dépôt: 11722466.7
(22) Date de dépôt: 01.06.2011
(51) Int. Cl.: B01D 46/02, A62C 3/00, A62C 4/00, G21C 9/00, G21F 7/015

(54) **DISPOSITIF AMÉLIORÉ DE LIMITATION DES CONSÉQUENCES D'UN INCENDIE GÉNÉRALISÉ DANS UN LOCAL**
VORRICHTUNG ZUR MINIMIERUNG DER FOLGEN EINES BRANDES IN EINEM RAUM
IMPROVED DEVICE FOR LIMITING THE CONSEQUENCES OF CONFLAGRATION IN A ROOM

(30) Priorité: 03.06.2010 FR 1054348
(43) Date de publication de la demande: 10.04.2013
(73) Titulaire: Commissariat à l'Énergie Atomique et aux Énergies Alternatives, 75015 Paris (FR)
(72) Inventeur: BOIS, Dominique, 04100 Manosque (FR); NEUMAN, Mathieu, 13840 Rognes (FR); DELAFORGE, Thierry, 84120 Pertuis (FR)
(74) Mandataire: Ilgart, Jean-Christophe
(86) Numéro de dépôt international: PCT/EP2011/059047
(87) Numéro de publication internationale: WO 2011/151377

(56) Documents cités:
- FR-A- 1 247 980
- FR-A1- 2 879 471
- GB-A- 1 165 821

## Description

### DOMAINE TECHNIQUE

La présente invention se rapporte au domaine des dispositifs passifs de limitation des conséquences d'un incendie, dispositifs qui garantissent la non propagation de la chaleur ou du feu et l'épuration des gaz rejetés, et permettent de limiter les phénomènes de surpression ou de dépression lorsqu'un incendie se déclare et qui peuvent être provoqués par l'incendie lui même, ou par un dispositif d'extinction de cet incendie, ou encore par la défaillance d'un autre appareil.

Plus particulièrement, elle concerne un dispositif adapté aux installations qui doivent maintenir la tenue d'une enveloppe ou d'un local à des effets de surpression ou d'excès de dépression, tout en garantissant la non propagation de la chaleur ou du feu.

### ÉTAT DE LA TECHNIQUE ANTÉRIEURE

Dans les installations qui détiennent et confinent des matières dangereuses, les exigences en matière de protection de l'environnement imposent de conditionner ces matières dangereuses en les plaçant dans un local adapté et confiné. Un tel local peut être sous forme d'une cellule d'entreposage.

Les exigences en matière de protection de l'environnement imposent de prendre en compte d'éventuelles atteintes ou défaillances de l'étanchéité de la cellule.

Dans certains domaines, par exemple dans le cas d'une cellule d'entreposage de matières nucléaires, il est usuel d'appliquer un ou deux principes de protection complémentaires, combinés ou non, pour isoler les matières dangereuses de l'environnement.

Un premier principe consiste à interposer plusieurs barrières statiques pour limiter les conséquences de la défaillance de l'une d'elle. La cellule d'entreposage peut être alors implantée à l'intérieur d'une enceinte, ou plus particulièrement enceinte de confinement, qui est elle-même isolée de l'environnement extérieur. Cette enceinte de confinement joue un rôle de deuxième barrière de protection. L'étanchéité de la cellule d'entreposage et celle de l'enceinte de confinement sont assurées par des cloisons étanches et par des portes étanches.

Un deuxième principe consiste à créer un système de confinement dynamique par la mise en oeuvre d'une ventilation mécanique, qui crée une cascade de dépression de l'extérieur de l'installation vers la cellule d'entreposage, afin de pallier les défauts d'étanchéité des barrières statiques. L'enceinte de confinement et la cellule d'entreposage peuvent chacune avoir un système de ventilation indépendant composé d'un réseau de soufflage d'air neuf provenant de l'extérieur et d'un réseau d'extraction de l'air de la cellule vers l'extérieur. En plus du confinement par le maintien en dépression des locaux à risque, les systèmes de ventilation peuvent assurer des fonctions complémentaires comme le renouvellement et l'épuration de l'air, par des filtres d'épuration adaptés aux types de matières dangereuses. Ces fonctions contribuent à maintenir propre l'atmosphère de la cellule d'entreposage et de l'enceinte de confinement afin de limiter les risques de transfert des matières dangereuses vers l'environnement.

Si les deux principes de protection mentionnés ci-dessus, combinés ou non, sont considérés comme suffisants en fonctionnement normal, il est nécessaire de prendre en compte des situations accidentelles telles qu'un incendie.

Dans certains cas, l'analyse du risque incendie conduit à prendre en compte un scénario enveloppe d'un incendie généralisé et non-maîtrisé dans un local sectorisé au feu, c'est-à-dire un local dont les parois gardent leur intégrité lorsqu'elles sont soumises au feu.

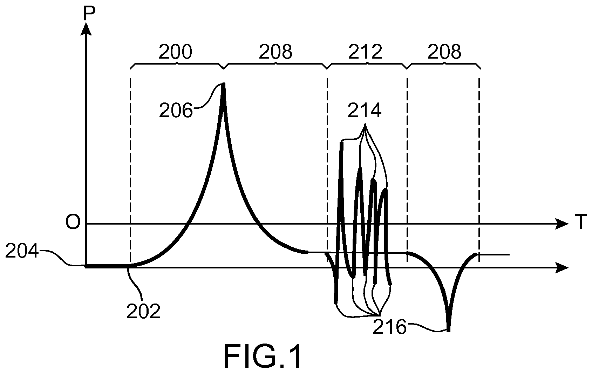

La connaissance des incendies dans les milieux confinés a permis d'établir les trois phases successives du déroulement d'un incendie, qui apparaissent sur la courbe de la figure 1, qui est une courbe de pression théorique d'un incendie généralisé et non maîtrisé dans une cellule d'entreposage qui détient et confine des matières dangereuses, et sur laquelle l'axe des abscisses correspond au temps (T) et l'axe des ordonnées correspond à la pression (P).

La première phase, désignée par le repère 200 sur la figure 1, est une phase de développement de l'incendie. Cette première phase 200 correspond à une période durant laquelle le comburant est non limitant. En l'absence de système d'extinction dans la cellule d'entreposage, les conditions thermodynamiques que sont la pression et la température dépendent de l'évolution de l'incendie. A partir du moment de début de combustion 202, la pression P augmente d'une valeur négative de dépression initiale 204 jusqu'à un pic de surpression au maximum de la puissance du feu 206. Il est constaté qu'une augmentation importante et rapide de la température et de la pression dans la cellule d'entreposage, de l'ordre de plusieurs centaines de degrés et de plusieurs dizaines de milliers de pascals, est de nature à remettre en cause l'intégrité du confinement statique de la cellule d'entreposage, ses dispositions d'isolement avec l'environnement, notamment des clapets coupe-feu et des filtres, ses dispositions de sectorisation au feu, notamment ses cloisons et ses portes étanches.

Les conditions extrêmes ci-dessus induisent un risque de dissémination des matières dangereuses vers l'enceinte de confinement et vers l'environnement, et de propagation de l'incendie au reste de l'installation. Les stratégies de gestion de la ventilation et en particulier, la fermeture automatique du réseau de soufflage de la cellule d'entreposage, dès la détection de l'incendie, permettent de limiter le développement du feu dans la cellule d'entreposage car seul l'oxygène présent est consommé par l'incendie. L'incendie est alors limité par le comburant présent dans la cellule d'entreposage, et non plus par le combustible.

La deuxième phase, désignée par le repère 208 sur la figure 1, est une phase d'étouffement de l'incendie. Cette deuxième phase 208 correspond à une période durant laquelle la puissance du feu est limitée par manque de comburant. L'étouffement de l'incendie provoque une baisse de la température, et donc une forte diminution de la pression de l'ordre de plusieurs milliers de pascals jusqu'à des valeurs négatives 216. Cette forte dépression dans la cellule d'entreposage peut également remettre en cause l'intégrité des structures déjà affaiblies par les conditions extrêmes de l'incendie. Lors de la phase d'étouffement 208, une fois que la pression dans la cellule d'entreposage est devenue négative, un nouvel apport d'air par les dégradations des structures peut entraîner une ré inflammation et une reprise de l'incendie.

La troisième phase, désignée par le repère 212 sur la figure 1 est une phase de reprise de l'incendie. Du fait de l'apport de comburant décrit dans la deuxième phase 208, il peut se produire un phénomène de reprise de l'incendie dans la cellule d'entreposage. Il en découle alors de nouveaux cycles d'extinction et de ré-inflammation entre des pics de surpression à la ré-inflammation 214 et des pics de dépression à l'extinction 216, qui correspondent à des montées en pression et en température et donc à des relâchements possibles vers l'environnement. Cependant, les conditions thermodynamiques d'un nouveau cycle d'incendie sont moins extrêmes que lors de la première phase 200, car la quantité d'oxygène présente dans la cellule d'entreposage, provenant des dégradations provoquées par les phases précédentes, est moins importante que durant la première phase 200.

Dans certains cas, les systèmes d'extinction fixes, par exemple à gaz, sont susceptibles de créer, par détente dans la cellule d'entreposage, une surpression capable de détériorer les performances des éléments participant à la barrière statique.

Dans d'autres cas, un incendie peut entrainer la rupture d'une capacité sous pression mettant en péril les éléments participant à la barrière statique de la même manière que dans les cas précédents.

On cherche ainsi à mettre en place un dispositif qui limite de manière passive le risque de transfert direct de la cellule d'entreposage vers son environnement extérieur par la dégradation des dispositifs d'isolement de la cellule d'entreposage, et qui empêche toute propagation du feu de la cellule d'entreposage vers son environnement extérieur.

On cherche à mettre en place un tel dispositif qui permet également de limiter les valeurs de pression, et de refroidir les gaz. Un tel dispositif doit répondre aux mêmes contraintes en termes de tenue au feu que la cellule d'entreposage.

Le document FR 2 879 471 divulgue un dispositif de limitation des conséquences ultimes d'un incendie généralisé non maîtrisé dans une cellule d'entreposage implantée dans une enceinte de confinement.

Ce dispositif comporte un réservoir fermé contenant un liquide doté d'une chambre interne en communication directe avec ladite cellule d'entreposage et une chambre de bullage en communication directe avec ladite enceinte de confinement par l'intermédiaire d'au moins une ouverture supérieure dudit réservoir, une protection pare-feu, et des systèmes de régulation des niveaux de liquide.

Ce dispositif conserve un caractère actif car il comporte plusieurs systèmes de régulations. En outre, les caractéristiques de ce dispositif font que les débits de gaz pouvant être traités sont limités.

Il s'agit donc de trouver un nouveau dispositif de limitation des conséquences d'un incendie, amélioré en termes de capacité de traitement des débits gaz, ayant un mode de fonctionnement davantage passif que les dispositifs de limitation existants, tout en conservant un encombrement équivalent.

### EXPOSÉ DE L'INVENTION

La présente invention concerne tout d'abord un dispositif de limitation des conséquences d'un incendie permettant de limiter les phénomènes de surpression et de dépression générés lorsqu'un incendie se déclare dans un local, telle qu'une cellule d'entreposage implantée dans une enceinte de confinement, comportant un réservoir doté d'une cuve contenant un liquide, ledit réservoir comportant une ou plusieurs chambre(s) dite(s) « chambre(s) interne(s) » en communication avec ledit local et une ou plusieurs autres chambres du réservoir, l'agencement du réservoir étant prévu de sorte que les chambre(s) interne(s) communiquent avec et une ou plusieurs desdites autres chambres et qu'un flux gazeux, généré en particulier par les phénomènes de pression suite à incendie, et échangé entre une ou plusieurs desdites chambres chambre(s) interne(s) et une ou plusieurs desdites autres chambres, est destiné à passer par le liquide contenu dans la cuve, le réservoir comportant en outre au moins un premier bac et au moins un deuxième bac de débordement intégrés, disposés de part et d'autre du réservoir, chaque bac étant adapté pour recevoir ledit liquide lorsque ce dernier dépasse d'une hauteur donnée prédéterminée dans ladite cuve.

Un tel dispositif a en outre une réactivité de déclenchement améliorée.

En effet, les bacs de débordement permettent de fiabiliser la valeur maximale de la pression qui sera atteinte dans le local, qui correspond au seuil de déclenchement additionné de la perte de charge du système. En d'autres termes, les bacs de débordement permettent de fixer une valeur de seuil de pression de déclenchement indépendamment du débit de gaz à traiter, et du niveau de liquide dans le réservoir. La hauteur du niveau de liquide étant directement liée à la variation de la pression, le fait de faire déborder le liquide à une côte définie permet de fixer une valeur de pression de déclenchement, quelque soit le débit de gaz à traiter. Le système de débordement permet d'augmenter la vitesse de débordement et donc la capacité du dispositif à absorber une variation brutale du niveau de liquide, correspondant à une augmentation brutale de la pression dans le local.

Les bacs de débordement permettent également de garantir le seuil de déclenchement du dispositif, lorsqu'un dysfonctionnement du système d'alimentation en liquide, telle qu'une fuite apparait. En effet, le liquide en surplus est récupéré dans ces bacs.

L'avantage de ce système est de ne pas dépendre de la vitesse d'écoulement du surplus de liquide dans un circuit d'écoulement, limité par le diamètre des conduites. Cette fonction de récupération par débordement dans les bacs a pour conséquence finale de ne pas ralentir l'ensemble du processus de limitation de pression dans le local.

La présence des bacs de débordement permet de simplifier le circuit d'alimentation en liquide et de le rendre plus passif, en s'affranchissant d'au moins un système de régulation.

Les bacs de débordement associés à un circuit d'alimentation en eau simplifié permettent d'améliorer la fiabilité de fonctionnement du dispositif et de le rendre plus réactif.

Le liquide utilisé peut être de l'eau.

Les dites chambres en communication avec l'enceinte de confinement peuvent comprendre une ou plusieurs chambres dites « de bullage ».

Les chambres de bullage communiquent avec une chambre dite « de ralentissement » située dans une partie supérieure du réservoir et communiquant avec l'enceinte de confinement par l'intermédiaire d'une ou plusieurs ouvertures.

Les chambres de bullage peuvent être séparées des chambres internes par l'intermédiaire d'éléments de séparation étant disposés orthogonalement, au fond du réservoir, lesdits éléments de séparation étant équipés de dispositifs casse vague formés de plaques fixées sur des extrémités inférieures des éléments de séparation et qui sont orientées vers l'intérieur de ladite au moins une chambre de bullage.

Les chambres de bullage peuvent comporter un dispositif de fractionnement de bulles.

Les chambres de bullage peuvent comporter en outre un dispositif anti-éclaboussure.

La chambre de ralentissement, combinée avec un dévésiculeur, une hauteur de chambres de bullage adaptée et les dispositifs anti-éclaboussures au dessus des chambres de bullage, est un moyen de limiter les projections de liquide en partie haute du dispositif.

Selon une possibilité, le dispositif de limitation des conséquences d'un incendie peut comprendre en outre des gouttières adaptées pour déverser ledit liquide dans les bacs de débordement lorsque le niveau de ce dernier atteint la hauteur donnée le long des bacs de débordement.

Le dispositif de limitation des conséquences d'un incendie, et de limitation de la pression ou de la dépression dans un local peut comprendre en outre des parois de séparation situées de part et d'autre de l'ensemble des chambres de bullage et des chambres internes, chacune des dites parois de séparation baignant dans le liquide et étant située entre une chambre interne et une entrée du premier bac de débordement.

Selon une possibilité, une des dites parois peut comporter des orifices dans sa partie supérieure.

Selon une autre possibilité, une des dites parois peut comporter des orifices dans le haut de sa partie latérale.

Le dispositif de limitation des conséquences d'un incendie peut comprendre en outre un système de régulation du niveau de liquide dans le réservoir doté d'un circuit d'alimentation du réservoir en liquide.

Le système de régulation peut être doté d'une vanne à flotteur, l'ouverture de cette vanne à flotteur permettant d'alimenter en liquide ladite cuve. Un tel système a par exemple pour avantage de compenser l'évaporation.

L'alimentation en liquide peut être sécurisée par une alimentation forcée indépendante du système de régulation.

### BRÈVE DESCRIPTION DES DESSINS

L'invention sera mieux comprise à la lecture de la description détaillée qui va suivre des modes de réalisation de l'invention, fournis à titre illustratif et nullement limitatif, en référence aux dessins annexés, dans lesquels :
- la figure 1, déjà décrite, représente la courbe de pression théorique d'un incendie généralisé et non maîtrisé dans une cellule d'entreposage contenant des matières dangereuses,
- la figure 2 illustre une implantation d'un dispositif de limitation des conséquences d'un incendie, raccordé à une cellule d'entreposage elle-même dans une enceinte de confinement,
- les figures 3A-3K illustrent différentes vues d'un dispositif de limitation d'incendie, en perspective et en coupe,
- les figures 4A-4J illustrent les différents états de fonctionnement du dispositif.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

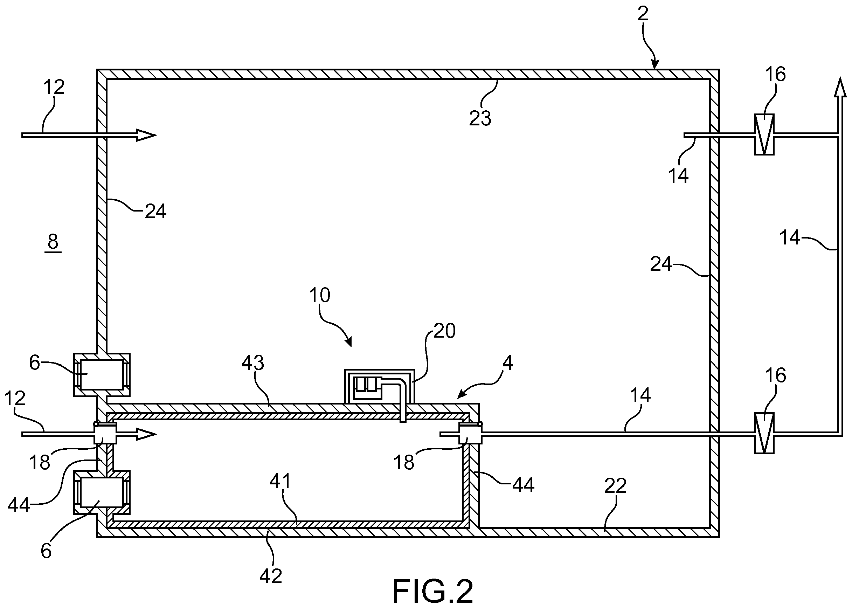

Un exemple d'implantation d'un dispositif de limitation 10 d'incendie suivant l'invention, qui est prévu dans un local tel qu'une cellule d'entreposage de matières dangereuses, comme par exemple des déchets nucléaires, est donné sur la figure 2.

Cette figure montre, en coupe longitudinale en élévation, l'installation d'entreposage, qui comporte une enceinte de confinement 2 dans laquelle est incluse une cellule d'entreposage 4. Les matières dangereuses sont entreposées dans la cellule d'entreposage 4.

L'enceinte de confinement 2 peut comporter une cloison inférieure 22, une cloison supérieure 23, et des cloisons latérales 24. La cellule d'entreposage 4 est disposée à l'intérieur de l'enceinte de confinement 2, sur la cloison inférieure 22 de l'enceinte de confinement 2. La cellule d'entreposage 4 comporte une cloison inférieure 42 qui est confondue avec la cloison inférieure 22 de l'enceinte de confinement 2. Elle comporte également une cloison supérieure 43 et des cloisons latérales 44. Dans cet exemple de réalisation, l'enceinte de confinement 2 et la cellule d'entreposage 4 peuvent être dotées de deux cloisons latérales communes. Les cloisons 42, 43, 44 de la cellule d'entreposage 4 peuvent être réalisées par exemple en béton. Elles sont recouvertes, à l'intérieur de la cellule d'entreposage 4, d'un revêtement de sectorisation au feu réalisé par exemple en plâtre et/ou en béton.

La cloison inférieure 22 de l'enceinte de confinement 2 peut être réalisée par exemple en béton. Les cloisons supérieures 23 et latérales 24 de l'enceinte de confinement 2 peuvent être réalisées par exemple en métal.

Les cloisons 22, 23, 24, 42, 43, 44 sont étanches aux liquides et aux gaz. Des sas 6, étanches, peuvent être prévus pour permettre l'accès de personnel d'exploitation à l'enceinte de confinement 2 et à la cellule d'entreposage 4 depuis l'extérieur 8 sans rupture du confinement.

L'enceinte de confinement 2 et la cellule d'entreposage 4 sont toutes deux dotées d'un système de ventilation. Ces systèmes de ventilation comportent chacun un réseau de soufflage 12 d'air provenant de l'extérieur 8, un réseau d'extraction 14 d'air vers l'extérieur 8, et un filtre d'épuration d'air 16. Le système de ventilation de la cellule d'entreposage 4 comporte également des clapets coupe-feu 18 implantés sur les conduits de soufflage et d'extraction du réseau de ventilation afin d'assurer la continuité de la sectorisation au feu.

Le dispositif de limitation 10 est installé à l'intérieur de l'enceinte de confinement 2 et à l'extérieur de la cellule d'entreposage 4. Ce dispositif de limitation peut être fixé sur une cloison support, qui est la cloison supérieure 43 de la cellule d'entreposage 4. Selon une possibilité de mise en oeuvre, plusieurs dispositifs de limitation peuvent être associés en parallèle afin d'augmenter la capacité de traitement.

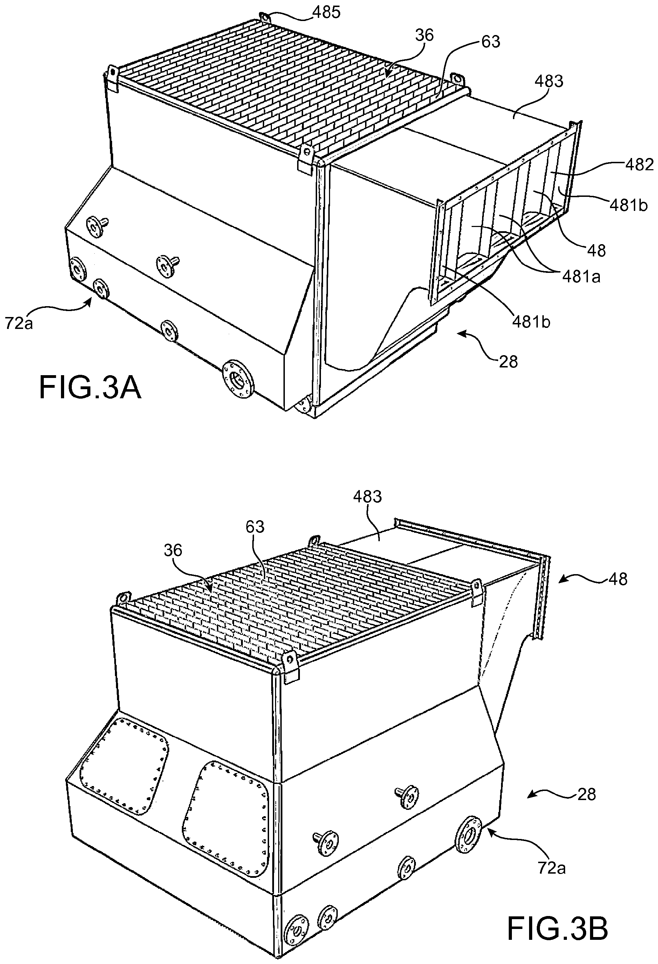

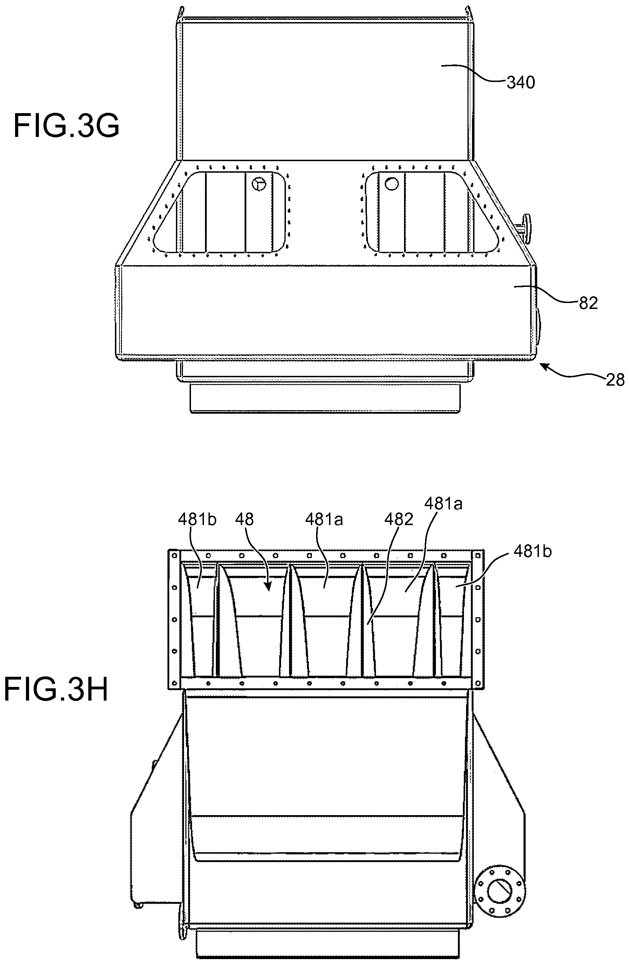

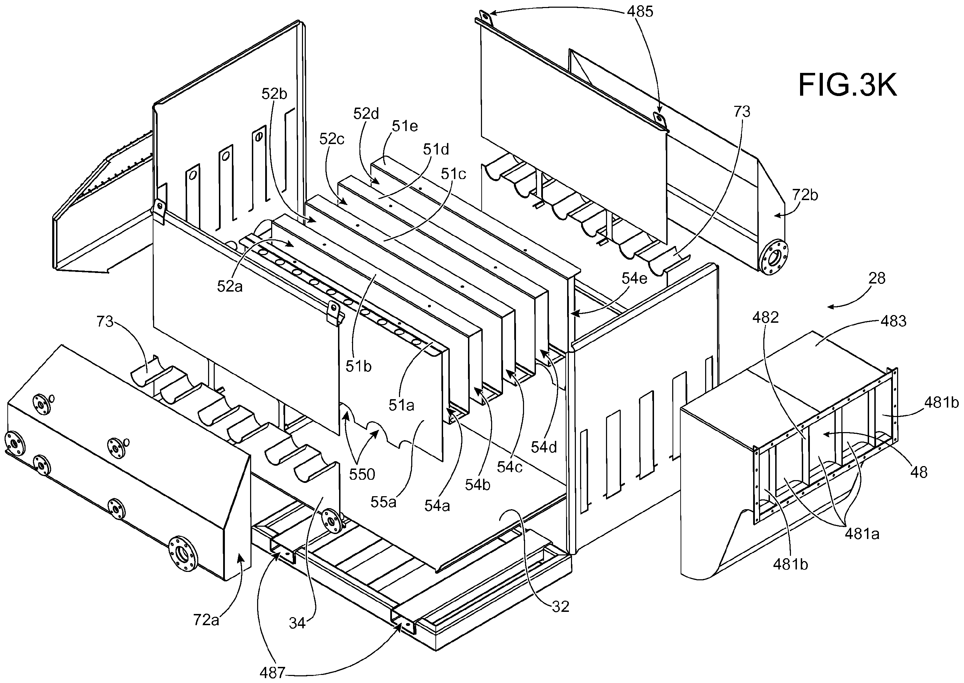

Un exemple de dispositif de limitation 10 des conséquences d'un incendie tel que mis en oeuvre suivant l'invention, va maintenant être décrit, en liaison avec les figures 3A-3K (le dispositif étant représenté en vue éclatée sur la figure 3K).

Les différents éléments constitutifs du dispositif de limitation 10 peuvent être réalisés, par exemple, en acier inoxydable.

Le dispositif de limitation 10 comprend un réservoir 28, destiné à contenir un liquide 26, tel que par exemple de l'eau.

Le réservoir 28 doté d'une cuve 29 comporte des parois latérales 34, et un fond 32 également appelée paroi inférieure 32.

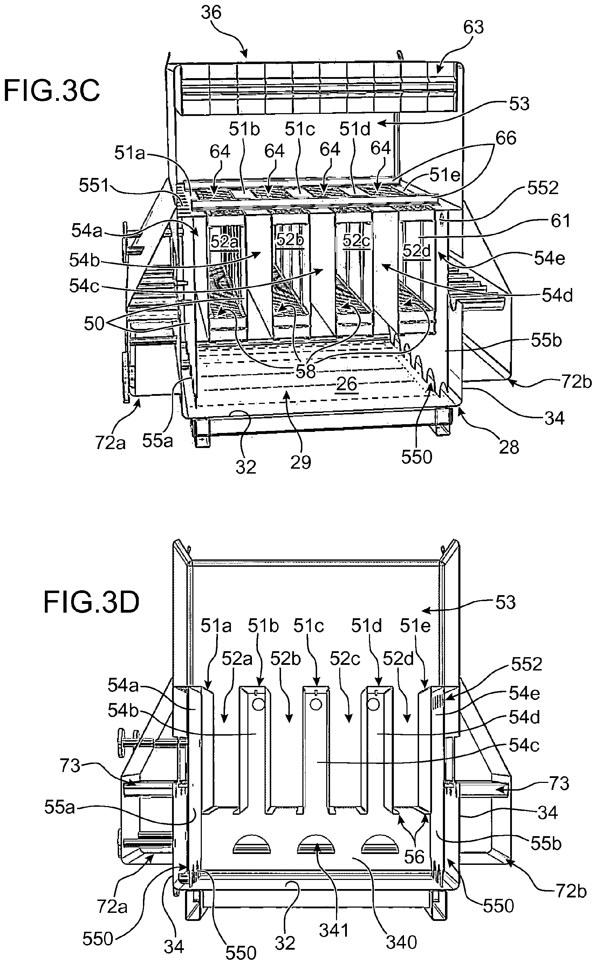

Une ou plusieurs ouvertures 36 sont situées sur la partie supérieure du réservoir 28, à l'opposé de la paroi inférieure 32, les ouvertures 36 étant en communication avec l'enceinte de confinement 2 (figures 3A, 3B, 3C).

Un conduit de raccordement (le conduit n'étant pas représenté sur les figures 3A-3K) permet d'assurer des échanges de gaz entre la cellule d'entreposage 4 et le réservoir 28 du dispositif de limitation 10.

Ainsi, une extrémité du conduit de raccordement débouche dans la cellule d'entreposage 4, tandis que l'autre des extrémités du conduit de raccordement est connectée à un conduit d'arrivée 48 du réservoir 28 constitué d'une pluralité de bouches d'arrivée 481a, 481b. Le conduit d'arrivée 48 peut comporter des bouches d'arrivée centrales 481a de section donnée et d'autres bouches d'arrivée 481b situées aux extrémités, de part et d'autre des bouches centrales 481a, et de section inférieures, par exemple de l'ordre d'un rapport ½, par rapport aux bouches d'arrivée centrales 481a. Cela peut permettre d'équilibrer la répartition des débits.

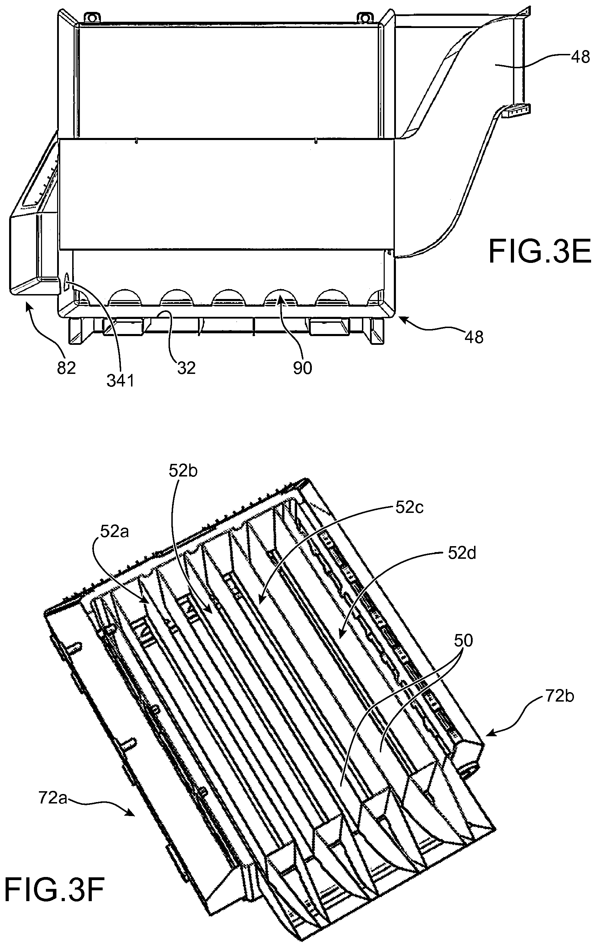

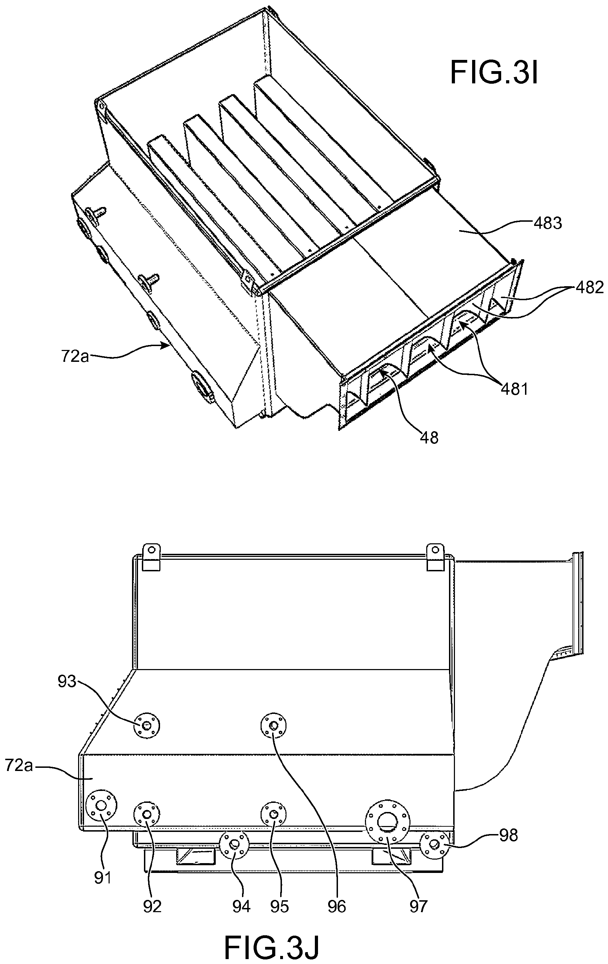

Les bouches d'arrivée 481a, 481b peuvent avoir une forme rectangulaire et être séparées entre elles par des déflecteurs 482, prévus pour former des moyens de guidage des gaz ou des fumées susceptibles de parvenir dans le conduit d'arrivée 48. Sur l'exemple illustré, le conduit d'arrivée 48 a une forme évasée, de manière à limiter les pertes de charges, et est intégré dans un habillage métallique 483 (figures 3A, 3E, 3F, 3H, 3I, 3K).

Le réservoir 28 comporte une ou plusieurs chambres 54a, 54b, 54c, 54d, 54e, que l'on appellera « chambres internes », qui sont en communication avec la cellule d'entreposage 4 par l'intermédiaire des conduits d'arrivée 48 et du conduit de raccordement.

Le réservoir 28 comporte également une ou plusieurs chambres 52a, 52b, 52c, 52d appelées « chambres de bullage », qui sont en communication avec une chambre appelée chambre dite « de ralentissement » 53, elle-même en communication avec l'enceinte de confinement 2 par l'intermédiaire des ouvertures 36 du réservoir 28.

Le dispositif peut comprendre par exemple quatre chambres de bullage 52a, 52b, 52c, 52d, et cinq chambres internes 54a, 54b, 54c, 54d, 54e réparties de part et d'autres des chambres de bullage (figures 3C, 3D, 3F, 3K).

Le réservoir 28 comporte des éléments de séparation 50 latérale entre les chambres internes 54a, 54b, 54c, 54d, 54e et les chambres de bullage 52a, 52b, 52c, 52d qui se présentent sous la forme de plaques s'étendant dans une direction orthogonale à la paroi inférieure 32 du réservoir 28. Les éléments de séparation 50 sont immergés, en fonctionnement normal, dans le liquide 26, sans atteindre la paroi inférieure 32 du réservoir 28.

Parmi l'ensemble des chambres internes, celles 54b, 54c, 54d, situées respectivement entre les chambres de bullage 52a, 52b, 52c, 52d, sont délimitées latéralement de chaque côté par les éléments de séparation 50.

Les autres chambres internes 54a, 54e, situées de part et d'autre de l'ensemble des chambres de bullages 52a, 52b, 52c, 52d, sont quant à elles chacune délimitées par un élément de séparation 50 et une plaque 55a, 55b formant une cloison, qui s'étend dans une direction orthogonale à la paroi inférieure 32 du réservoir 28. Les plaques 55a, 55b formant une cloison ont une hauteur supérieure à celle des éléments de séparation 50 et sont également immergées, en fonctionnement normal, dans le liquide 26. Les plaques 55a, 55b formant une cloison peuvent éventuellement atteindre la paroi inférieure 32 du réservoir 28 (figures 3C, 3D). Les extrémités des plaques 55a, 55b formant une cloison situées à proximité de la paroi inférieure 32, peuvent comprendre des ouvertures 550 en forme d'arc de cercle, prévues pour permettre de laisser passer le liquide 26 tout en permettant aux plaques 55a, 55b de conserver une bonne rigidité.

D'autres plaques 51a, 51b, 51c, 51d, 51e situées en partie supérieure du réservoir 28, dans un même plan et parallèle à la paroi inférieure 32 de ce dernier, délimitent quant à elles le dessus ou la partie supérieure des chambres internes 54a, 54b, 54c, 54d, 54e.

La chambre de ralentissement 53, située en partie supérieure du réservoir 28, est quant à elle délimitée de chaque côté par les parois latérales 34 du réservoir 28, ainsi que par les plaques 51a, 51b, 51c, 51d, 51e.

La chambre de ralentissement 53 est prévue avec une section plus importante que celle des chambres de bullage 52a, 52b, 52c, 52d (figure 3C).

Comme illustré sur la figure 3C, chaque élément de séparation 50 du réservoir 28 peut être rattaché au niveau de son extrémité supérieure à une des plaques 51a, 51b, 51c, 51d, 51e, et au niveau de son extrémité inférieure à une plaque 56 dite « casse vague », qui est immergée dans le liquide 26 en fonctionnement normal du dispositif de limitation 10.

Les plaques casse vague 56 s'étendent vers l'intérieur des chambres de bullage 52a, 52b, 52c, 52d dans une direction qui peut être parallèle à celle du fond 32 du réservoir.

L'agencement des conduits d'arrivée 48 est tel qu'un flux gazeux parvenant dans ces conduits d'arrivée 48 est guidé sous les plaques casse-vague 56.

Dans le dispositif de limitation suivant l'invention, la longueur développée de casse-vague 56, correspond au cumul de toutes longueurs L des chambres de bullage 52a, 52b, 52c, 52d soit 8 L, par exemple de l'ordre de 12 mètres. Une telle longueur de bullage peut permettre de traiter un débit de gaz important par exemple de l'ordre de 20 000 m³/h, en obligeant l'air à passer dans l'eau.

Le dispositif de limitation 10 comporte également des dispositifs de fractionnement de bulles 58, destinés à fractionner des bulles de gaz en des bulles plus petites, afin d'augmenter au maximum la surface d'échange entre le gaz et le liquide 26, lors d'une phase de développement d'un incendie 200 telle que décrite précédemment en liaison avec la figure 1.

Les dispositifs de fractionnement de bulles 58 (figure 3C, les dispositifs de fractionnement de bulles 58 n'étant pas représentés sur la figure 3D) favorisent l'échange thermique entre les gaz et le liquide 26, et assurent également un compromis entre la limitation des pertes de charges et la non-coalescence des bulles.

Chaque dispositif de fractionnement de bulles 58 est disposé en partie inférieure d'une chambre de bullage 52a, 52b, 52c, 52d, et repose sur les plaques casse vague 56 d'une chambre de bullage 52a, 52b, 52c, 52d. En fonctionnement normal, les dispositifs de fractionnement de bulles 58 sont immergés dans le liquide 26 du dispositif de limitation 10. Chaque dispositif de fractionnement de bulles 58 peut être formé par exemple d'une superposition de couches de fils métalliques entre-maillés, chaque couche étant interposée entre des grilles de maintien.

Le dispositif de limitation 10 peut comporter également des dispositifs anti-éclaboussure 64, qui sont destinés à limiter les éclaboussures de liquide 26 lors de l'échappement des gaz du local 4 (figure 3C, les dispositifs anti-éclaboussure 64 n'étant pas représentés sur la figure 3D). Chaque dispositif anti-éclaboussure 64 est disposé en partie supérieure d'une chambre de bullage 52a, 52b, 52c, 52d, et peut être formé par exemple d'une couche de fils métalliques entre-maillés, ladite couche étant interposée entre deux grilles de maintien. Les chambres de bullage et les dispositifs anti-éclaboussure 64 sont assemblés sous forme de paniers et sont maintenus par des traverses 66 reposant sur les plaques 51a, 51b, 51c, 51d, 51e.

Selon une possibilité de mise en oeuvre, chaque dispositif anti-éclaboussure 64 peut être solidaire d'un dispositif de fractionnement de bulles 58, qui est situé dans la même chambre de bullage, par l'intermédiaire des paniers et de tiges de maintien 61 (figure 3C).

Ces tiges de maintien 61 permettent un montage simultané des dispositifs anti-éclaboussure 64 et de fractionnement de bulles 58 dans les chambres de bullage 52a, 52b, 52c, 52d.

Les dispositifs anti-éclaboussure 64 sont situés en entrée de la chambre de ralentissement 53, tandis qu'en sortie de cette dernière se trouve un dispositif dévésiculeur 63, placé sur la partie supérieure du réservoir 28. Le dévésiculeur 63 est prévu pour réaliser une séparation des particules liquides en suspension dans un courant gazeux issu de ce dernier. Un tel dévésiculeur 63 permet de limiter les projections de liquide à l'extérieur du réservoir (figures 3A-3C, le réservoir étant représenté sans le dévésiculeur sur les figures 3D, 3E, 3I, 3K). Les ouvertures 36 communicant avec l'enceinte de confinement 2 sont situées en sortie du dévésiculeur 63.

A proximité de l'entrée de la chambre de ralentissement 53, et de la sortie des chambres 52a, 52b, 52c, 52d, 52e de bullage se trouvent des orifices 551 de récupération de liquide 26 prévus dans une plaque 51a.

Le réservoir 28 comprend également une chambre 82 de régulation des niveaux de liquide dont le fonctionnement sera décrit ultérieurement, et qui est séparée des chambres de bullage 52a, 52b, 52c, 52d, et des chambres internes 54a, 54b, 54c, 54d, 54e par une paroi 340 (la chambre de régulation 82 n'étant pas représentée sur la figure 3I).

La paroi 340 est ajourée et comporte des ouvertures 341 permettant de laisser passer le liquide 26 contenu dans le réservoir 28.

Dans le dispositif de limitation suivant l'invention, des bacs de débordement 72a, 72b intégrés au réservoir 28, sont prévus de chaque coté de ce dernier et communiquent avec ce dernier par l'intermédiaire d'ouvertures 341 réalisées dans les parois 34.

Ces bacs 72a, 72b de débordement sont prévus pour récupérer du liquide 26 lorsque le niveau de ce dernier dépasse dans le réservoir 28 d'une certaine hauteur seuil prédéterminée. Les bacs 72a, 72b permettent notamment de limiter la perte de charge en fonctionnement du dispositif, la hauteur d'eau étant directement liée à une différence de pression.

Cette hauteur seuil dépend d'un seuil de déclenchement que l'on souhaite conférer au dispositif. Lorsqu'on fait déborder un trop plein de liquide 26 à une hauteur seuil définie de manière à fixer une valeur de pression seuil de liquide 26 dans la cuve 29. Les bacs de débordement permettent de fiabiliser le dispositif en fixant une valeur de seuil de pression de déclenchement quelque soit le débit de gaz à traiter, et quelque soit le niveau de liquide dans le réservoir.

Les bacs 72a, 72b de débordement permettent ainsi de piéger le liquide 26, notamment en cas de dysfonctionnement d'un circuit d'alimentation en liquide 26. Un excès de liquide 26 qui serait dû à une fuite du circuit d'alimentation en liquide peut être en effet récupéré par les bacs de débordement 72a, 72b, et n'empêcherait pas le dispositif de limitation 10 de fonctionner, dans la mesure où le niveau de pression de déclenchement lié à la hauteur de liquide 26 serait ainsi conservé.

Les bacs de débordement 72a, 72b permettent également de mettre en oeuvre un système de régulation des niveaux de liquides simplifié par rapport à un dispositif de limitation suivant l'art antérieur et tel que décrit par exemple dans le document FR 2 879 471.

Les bacs de débordement 72a, 72b peuvent permettre d'évacuer une importante quantité d'eau en peu de temps, et pour une perte de charge très limitée par exemple entre 100 et 200 litres en moins de 5 secondes pour 100 Pa de perte de charge.

Des gouttières 73 sont prévues pour déverser ledit liquide 26 dans les bacs 72a, 72b. Ces gouttières 73 permettent d'obtenir une longueur de débordement accrue et améliorent la capacité du dispositif à pouvoir absorber une variation brutale de niveau de liquide 26, par exemple due à une augmentation rapide de pression dans la cellule d'entreposage.

Des éléments peuvent être prévus pour faciliter le transport du réservoir 28. Des anneaux 485 situés aux coins supérieurs du réservoir peuvent être notamment prévus pour accueillir des moyens tels qu'une ou plusieurs élingues afin de soulever le réservoir 28.

Des ouvertures 487 situées aux coins inférieurs du réservoir peuvent être notamment prévues pour recevoir les fourches des moyens de transport tels qu'un transpalette afin de déplacer le réservoir 28 (figure 3E, figure 3K).

Le réservoir peut être muni d'une pluralité de brides disposées d'un même côté du réservoir 28, dont notamment une bride d'arrivée d'eau 91, des brides inférieure 92 et supérieure 93 entre lesquelles une colonne à eau est disposée pour effectuer une visualisation de niveau, des brides inférieure 95 et supérieure 96 de mesure de niveau, des brides 97 pour les évacuations des bacs secs (figure 3J).

Le dispositif de limitation 10 comporte en outre un système de régulation des niveaux de liquide 80 qui permet :
- de maintenir, en fonctionnement normal, le niveau du liquide 26 dans le réservoir 28, et
- de remplir le réservoir 28 en liquide 26, lors de l'échappement des gaz pendant la phase de développement de l'incendie 200, afin de compenser la consommation du liquide 26, par évaporation ou par débordement dans les bacs 72a, 72b, et ainsi de garantir la continuité de l'échange thermique entre les gaz et le liquide 26 pour refroidir les gaz de combustion jusqu'à une température inférieure à une température seuil de ré-inflammation.

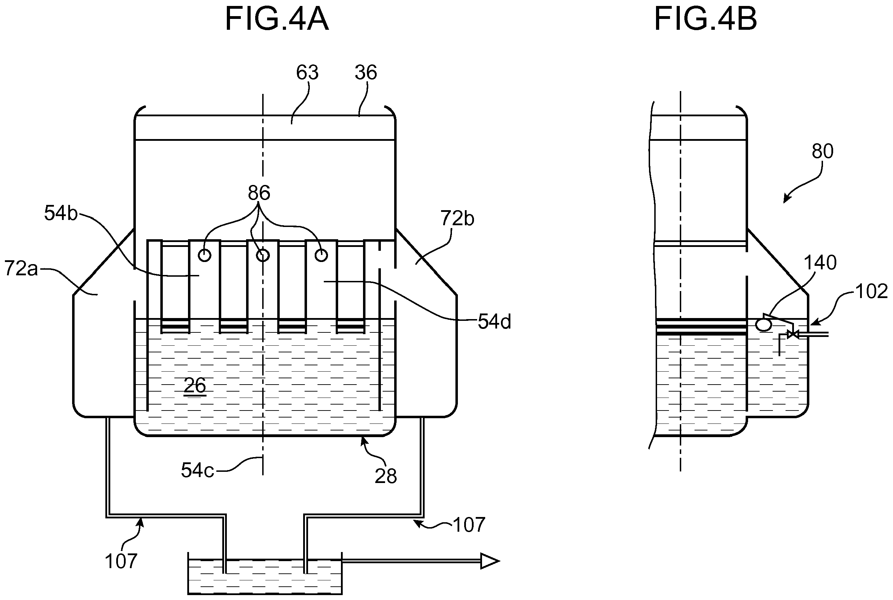

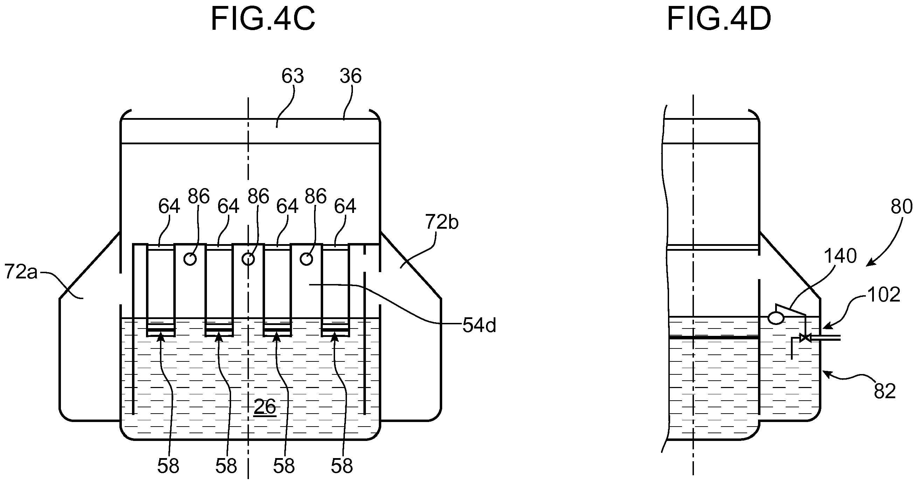

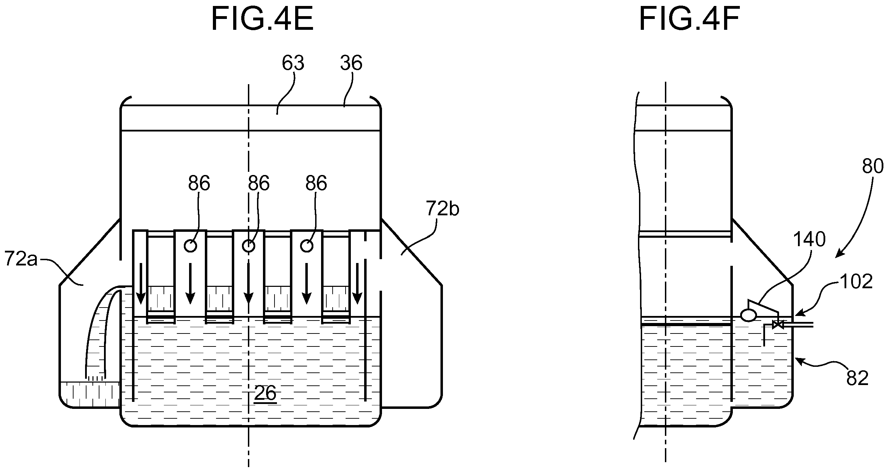

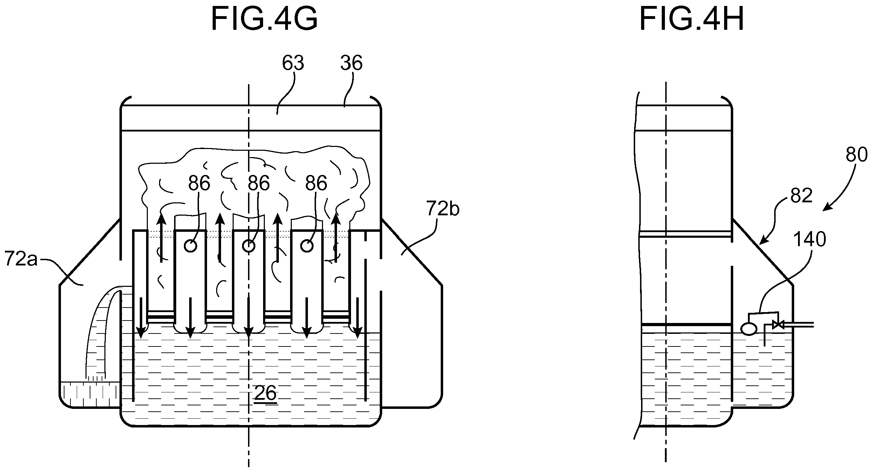

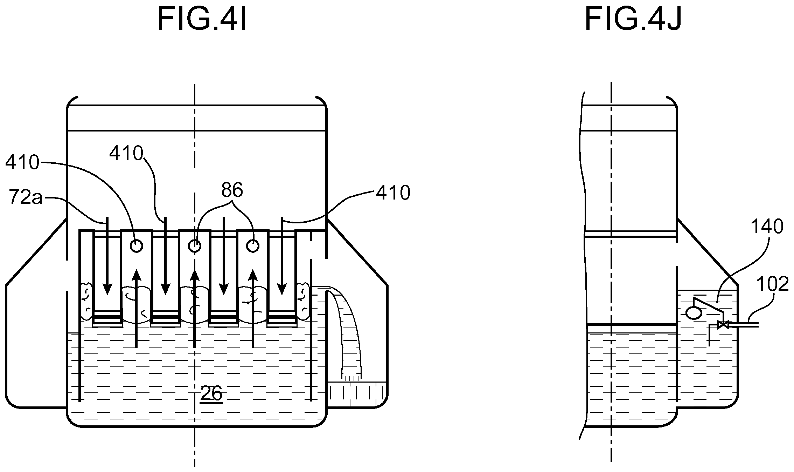

Le système de régulation des niveaux de liquide 80 est un système mécanique, qui est représenté de manière schématique sur les figures 4B, 4D, 4F, 4H, 4J.

Les plaques formant une cloison 55a, 55b sont situées à distance de l'entrée des bacs de débordement 72a, 72b, et établissent une séparation entre les entrées des bacs 72a, 72b et les chambres internes 54a, 54e. Des orifices 552 sont formés dans la partie supérieure sur la face latérale de la plaque 55b, notamment pour réintroduire du liquide 26 et permettre ainsi la mise en pression des bacs de débordement (figure 3D).

Le système de régulation des niveaux de liquide 80 comporte un compartiment de régulation 82 fermé.

Sur l'exemple illustré aux figures 4A-4I, le compartiment de régulation 82, est accolé au réservoir 28 et situé dans des zones ne subissant pas les bouillonnements des gaz lors des différentes phases de fonctionnement du dispositif de limitation 10, c'est-à-dire les phases d'échappement (figures 4G et 4H) et d'admission (figures 4I et 4J).

Le compartiment de régulation 82 est séparé par l'intermédiaire d'une paroi avec les chambres de bullage et les chambres internes, cette paroi étant dotée d'orifices 86 de communication.

Sur l'exemple illustré aux figures 4A-4I, le compartiment de régulation 82 est à la pression de la cellule d'entreposage 4 par l'intermédiaire d'un orifice d'aération 86 directement relié au conduit de raccordement 46, et il est raccordé au réservoir 28 par l'intermédiaire d'un orifice de communication 341 situé en partie inférieure de la paroi commune 340.

Le compartiment de régulation des niveaux de liquide 82 constitue aussi une réserve de liquide 26. Il est situé en hauteur par rapport au dispositif de limitation 10 de façon à permettre sa vidange en même temps que celle du dispositif. La réserve permet d'alimenter le carter en liquide 26, en cas de baisse du niveau de liquide 26 dans le dispositif de limitation 10. Sa capacité est déterminée en fonction de la puissance du feu.

Le système de régulation des niveaux de liquide 80 comporte aussi un circuit d'alimentation et d'évacuation, qui comporte : un tuyau d'alimentation 102 en liquide 26, le tuyau de remplissage 118 alimentant le compartiment de régulation 82, par l'intermédiaire d'une vanne à flotteur 140.

Le rôle des différents éléments du système de régulation des niveaux de liquide 80 va être précisé ci-après.

La vanne à flotteur 140, qui est fermée en fonctionnement normal, est située dans le compartiment de régulation 82 raccordé à la chambre interne 54 ; le positionnement de cette vanne à flotteur 140 dans le compartiment de régulation 82 définit la quantité de liquide 26 qui se trouve dans le dispositif de limitation 10.

On va maintenant décrire le fonctionnement du dispositif de limitation 10, en référence aux figures 4C, 4E, 4G, 4I d'une part, qui représentent le réservoir avec ses bacs 72a, 72b de débordement et les chambres internes et de bullage en coupe verticale longitudinale, dans les situations respectives d'état d'équilibre, de phase juste avant déclenchement, de phase d'échappement, et de phase d'admission d'air.

De même, les figures 4D, 4F, 4H, 4J représentent respectivement le compartiment de régulation 82 dans les situations respectives d'état d'équilibre, de phase juste avant déclenchement, de phase de déclenchement, et de phase d'admission d'air.

En fonctionnement normal ou « état d'équilibre » (figures 4C et 4D), le dispositif de limitation 10 garantit le confinement statique de la cellule d'entreposage 4. En effet, la présence de liquide 26 au-dessus de l'extrémité des éléments de séparation 50 délimitant les chambres de bullages, des chambres internes, assure l'étanchéité de la cellule d'entreposage 4 au niveau du dispositif de limitation 10.

En situation d'incendie, le dispositif de limitation 10 décrit précédemment fonctionne de manière autonome et passive de la façon suivante :

Lors de la première phase 200 de l'incendie (figures 4E et 4F), correspondant au développement d'un incendie généralisé et non-maîtrisé dans la cellule d'entreposage 4, la pression et la température y augmentent très fortement. Les chambres internes 54b, 54c, 54d du réservoir 28 sont en communication avec la cellule d'entreposage 4 en feu par l'intermédiaire du conduit d'arrivée 48. Par conséquent l'augmentation de la pression repousse le liquide 26 des chambres internes et le fait buller dans les chambres de bullage et déborder dans le bac de débordement 72a.

Le niveau de liquide 26 des chambres internes 54a, 54b, 54c, 54d, 54e baisse jusqu'au niveau des plaques casse vague 56 situées aux extrémités des éléments de séparations 50. Quand la pression dans la les chambres internes 54a, 54b, 54c, 54d, 54e atteint la pression seuil de déclenchement p_ech (figures 4G et 4H), les gaz chauds de l'incendie passent sous les plaques casse-vague 56, et forment de grosses bulles de gaz.

Lors de leur remontée à la surface des chambres de bullage 52a, 52b, 52c, 52d, les grosses bulles de gaz sont fractionnées en de très petites bulles de gaz 300 par les dispositifs de fractionnement de bulles 58. Les petites bulles remontent à la surface libre de l'eau. L'énergie apportée par les bulles de gaz à l'eau provoque un bouillonnement qui entraîne des projections d'eau (les bulles de gaz étant transformées en gouttelettes d'eau) qui sont arrêtées par la chambre de ralentissement 53, les dispositifs anti-éclaboussure 64 et le dévésiculeur 63. Le niveau de liquide 26 dans le compartiment de régulation 82 qui régule la chambre interne 54 baisse et par conséquent, la vanne à flotteur 140 s'ouvre (figure 4H).

Par conséquent, le système de régulation des niveaux de liquide 80 est mis en marche et le dispositif de limitation 10 est alimenté en liquide 26.

Le dispositif de limitation 10 s'est déclenché de manière autonome et passive pour une pression seuil p_ech, inférieure à la « pression de sécurité » Pₛ des organes de confinement de la cellule d'entreposage 4.

Les gaz chauds de l'incendie sont refroidis par bullage dans les chambres de bullage 52a, 52b, 52c, 52d jusqu'à une température inférieure à la température seuil de ré-inflammation, empêchant ainsi la propagation de l'incendie à l'enceinte de confinement 2.

L'important taux de renouvellement de la ventilation de l'enceinte de confinement 2, relativement au volume des gaz refroidis s'échappant du dispositif de limitation 10 assure une dilution des gaz. Un système de ventilation de l'enceinte de confinement 2 peut assurer le maintien du confinement dynamique et le traitement de l'atmosphère de l'enceinte de confinement 2 en opposant notamment une dernière barrière de filtration 16 avant le rejet dans l'environnement extérieur 8.

Lors de la deuxième phase 208 de l'incendie (Figures 4I et 4J), correspondant à une phase d'extinction de l'incendie, la température et la pression diminuent très fortement, la dépression ainsi créée pouvant atteindre plusieurs milliers de Pascals. Dès que la cellule d'entreposage 4 se trouve en dépression, la ou les chambres interne(s) 54b, 54c, 54d et le compartiment de régulation 82 qui régule cette chambre ou ces chambres interne(s) 54b, 54c, 54d, en communication avec la cellule d'entreposage 4, sont eux aussi en dépression. Dès que la dépression dans la ou les chambres internes 54b, 54c, 54d atteint le seuil p_adm, le dispositif de limitation 10 fonctionne de manière totalement réversible.

De l'air frais provenant de l'enceinte de confinement 2 passe sous les plaques casse-vague 56 des chambres de bullage 52, et il se forme des bulles d'air qui remontent à la surface du liquide 26 de la chambre interne 54 pour être introduit dans la cellule d'entreposage 4 et ainsi limiter la dépression dans la cellule d'entreposage 4 à une dépression inférieure à la dépression de sécurité : -P_{S}.

Les niveaux de liquide 26 des chambre interne 54 et du compartiment de régulation 82 en communication avec cette chambre interne 54 montent, la vanne à flotteur 140 est fermée, et par conséquent, le système d'alimentation en liquide 80 ne se déclenche pas. L'apport d'air frais au foyer de l'incendie peut alors générer une ré-inflammation pour laquelle le dispositif de limitation 10 demeure disponible et efficace.

### EXEMPLE DE RÉALISATION

Les différents composants du dispositif de limitation 10 sont normalement dimensionnés sur la base d'une évaluation enveloppe des conditions thermodynamiques maxima d'un incendie généralisé non maîtrisé d'une cellule d'entreposage 4. Cette étude préalable permet de déterminer les seuils de pression de déclenchement p_ech et p_adm du dispositif de limitation 10 et le débit devant s'échapper par le dispositif de limitation 10 pour maintenir la pression de la cellule d'entreposage 4 à une pression inférieure à la « pression de sécurité » Pₛ des organes de confinement, c'est-à-dire des clapets coupe-feu, des portes de sas, des cloisons.

Un exemple de dimensionnement est fourni ci-dessous, en considérant un incendie généralisé à cinétique très lente, ce qui peut être le cas pour des déchets conditionnés en fûts métalliques.
- pression de sécurité Pₛ des organes de confinement : +/- 2100 Pa,
- volume de l'enceinte de confinement 2 : 15000 m³,
- volume de la cellule d'entreposage 4 : 3000 m³,
- taux de renouvellement de la ventilation : 2 Volumes/h,
- pression de déclenchement du dispositif de limitation 10, 11, lors de la première phase 200 de développement de l'incendie : + 1200 Pa,
- pression de déclenchement du dispositif de limitation 10, 11 lors de la phase d'admission : - 1200 Pa.
- débit théorique des gaz s'échappant de la cellule d'entreposage 4 : 20000 m³/h.

## Revendications

1. Dispositif de limitation (10, 11) des conséquences d'un incendie permettant de limiter les phénomènes de surpression et de dépression générés lorsqu'un incendie se déclare dans un local (4), le dispositif comportant un réservoir (28) doté d'une cuve (29) contenant un liquide (26), ledit réservoir (28) comportant une ou plusieurs chambre(s) dite(s) « chambre(s) interne(s) » (54a, 54b, 54c, 54d, 54e) en communication avec ledit local (4) et une ou plusieurs autres chambres (52a, 52b, 52c, 52d, 53) du réservoir, l'agencement du réservoir étant prévu de sorte que les chambre(s) interne(s) communiquent avec et une ou plusieurs desdites autres chambres et qu'un flux gazeux, généré en particulier par les phénomènes de pression suite à incendie, et échangé entre une ou plusieurs desdites chambres chambre(s) interne(s) et une ou plusieurs desdites autres chambres, est destiné à passer par le liquide contenu dans la cuve, le dispositif étant **caractérisé en ce que** le réservoir (28) comporte en outre au moins un premier bac (72a) et au moins un deuxième bac (72b) de débordement intégrés disposés de part et d'autre du réservoir (28) chaque bac étant adapté pour recevoir ledit liquide (26) lorsque ce dernier dépasse d'une hauteur donnée prédéterminée dans ladite cuve (29).

2. Dispositif selon la revendication 1, le local (4) étant une cellule d'entreposage implantée dans une enceinte de confinement (2), lesdites autres chambres (52a, 52b, 52c, 52d, 53) étant en communication avec ladite enceinte de confinement (2).

3. Dispositif selon la revendication 2, les dites autres chambres en communication avec l'enceinte de confinement comprenant une ou plusieurs chambres dites « de bullage » (52a, 52b, 52c, 52d).

4. Dispositif selon la revendication 3, les dites chambres de bullage (52a, 52b, 52c, 52d) communicant avec une chambre (53) dite « de ralentissement » située dans une partie supérieure du réservoir (28) et communicant avec l'enceinte de confinement par l'intermédiaire d'une ou plusieurs ouvertures (36).

5. Dispositif selon la revendication 4, la chambre « de ralentissement » (53) comportant un dévésiculeur (63).

6. Dispositif de limitation (10, 11) selon l'une quelconque des revendications 3 à 5, les chambres de bullage (52a, 52b, 52c, 52d) étant séparées des chambres internes (54a, 54b, 54c, 54d, 54e) par l'intermédiaire d'éléments de séparation (50) disposés orthogonalement, au fond du réservoir (32), lesdits éléments de séparation (50) étant équipés de dispositifs casse vague (56), formés de plaques fixées sur des extrémités inférieures des éléments de séparation (50) et qui sont orientées vers l'intérieur d'au moins une chambre de bullage (52).

7. Dispositif selon l'une quelconque des revendications 3 à 6, les chambres de bullage (52a, 52b, 52c, 52d) comportant un dispositif de fractionnement de bulles (58).

8. Dispositif selon l'une quelconque des revendications 3 à 7, les chambres de bullage (52a, 52b, 52c, 52d) comportant en outre un dispositif anti-éclaboussure (64).

9. Dispositif selon la revendication 8, dans lequel le dispositif anti-éclaboussure (64) est maintenu solidaire du dispositif de fractionnement de bulles (58) par l'intermédiaire d'au moins un panier et de tiges de maintien (61).

10. Dispositif selon l'une des revendications 3 à 9, comprenant en outre : des gouttières (73) adaptées pour déverser ledit liquide donné (26) dans les bacs de débordement (72a, 72b) lorsque le niveau de ce dernier atteint la hauteur donnée prédéterminée.

11. Dispositif selon l'une des revendications 3 à 10, comprenant en outre des parois de séparation (55a, 55b) situées de part et d'autre de l'ensemble des chambres de bullage (52a, 52b, 52c, 52d) et des chambres internes (54a, 54b, 54c, 54d, 54e), chacune des dites parois de séparation baignant dans le liquide (26) et étant située entre une chambre interne (54a) et une entrée d'un des bacs de débordement (72a).

12. Dispositif selon l'une des revendications 3 à 11, une des dites parois comportant des orifices (552) dans la partie supérieure sur la face latérale de la plaque (55b).

13. Dispositif selon l'une des revendications 1 à 12, comprenant en outre un système de régulation des niveaux de liquide (80) dans le réservoir, ledit système de régulation étant doté d'un circuit d'alimentation du réservoir en liquide (26).

14. Dispositif selon la revendication 13, le système de régulation étant doté d'une vanne à flotteur, l'ouverture de ladite vanne à flotteur (140) permettant d'alimenter en liquide ledit réservoir (28).

15. Dispositif selon la revendication 14, l'alimentation en liquide étant réalisée par une alimentation forcée indépendante du système de régulation.

## Patentansprüche

1. Vorrichtung zur Begrenzung der Folgen eines Brandes die erlaubt, Überdruck- und Unterdruck-Phänomene zu begrenzen, die beim Ausbrechen eines Brandes in einer Räumlichkeit (4) entstehen, aufweisend einen Behälter (28), der mit einer eine Flüssigkeit (26) enthaltenden Wanne (29) versehen ist, wobei der Behälter (28) eine oder mehrere Kammern, die bezeichnet werden als "interne Kammer(n)" (54a, 54b, 54c, 54d, 54e) und die mit der Räumlichkeit (4) in Verbindung stehen, sowie eine oder mehrere weitere Behälterkammern (52a, 52b, 52c, 52d, 53) aufweist,
**dadurch gekennzeichnet, dass**
der Behälter (28) weiter mindestens einen ersten Überlauftrog (72a) und mindestens einen zweiten Überlauftrog (72b) aufweist, die integriert angeordnet sind und zu beiden Seiten des Behälters (28) angeordnet sind, wobei jeder Trog ausgebildet ist, um die Flüssigkeit (26) aufzunehmen, wenn diese eine gegebene vorbestimmte Höhe in der Wanne (29) übersteigt.

2. Vorrichtung nach Anspruch 1, wobei die Räumlichkeit (4) eine Zwischenlagerzelle ist, die in eine Sicherheitshülle (2) eingesetzt ist, wobei die weiteren Kammern (52a, 52b, 52c, 52d, 53) in Kommunikation mit der Sicherheitshülle (2) stehen.

3. Vorrichtung nach Anspruch 2, wobei die weiteren Kammern, die in Kommunikation mit der Sicherheitshülle stehen, eine oder mehrere als "Durchperlungskammern" bezeichnete Kammern (52a, 52b, 52c, 52d) aufweisen.

4. Vorrichtung nach Anspruch 3, wobei die Durchperlungskammern (52a, 52b, 52c, 52d) mit einer als "Abbremskammer" bezeichneten Kammer (53) in Verbindung stehen, die sich in einem oberen Teil des Behälters (28) befindet und mit der Sicherheitshülle über eine oder mehrere Öffnungen (36) in Verbindung steht.

5. Vorrichtung nach Anspruch 4, wobei die "Abbremskammer" (53) einen Entnebler (63) aufweist.

6. Begrenzungsvorrichtung (10, 11) nach einem der Ansprüche 3 bis 5, wobei die Durchperlungskammern (52a, 52b, 52c, 52d) von den innenliegenden Kammern (54a, 54b, 54c, 54d, 54e) mittels rechtwinklig am Boden des Behälters (32) angeordneten Trennungselementen (50) getrennt sind, wobei die Trennungselemente (50) mit Wellenbrechervorrichtungen (56) ausgerüstet sind, die aus Platten ausgebildet sind, welche an den unteren Enden der Trennungselemente (50) befestigt sind und hin zum Inneren mindestens einer Durchperlungskammer (52) ausgerichtet sind.

7. Vorrichtung nach einem der Ansprüche 3 bis 6, wobei die Durchperlungskammern (52a, 52b, 52c, 52d) eine Blasenbrechvorrichtung (58) aufweisen.

8. Vorrichtung nach einem der Ansprüche 3 bis 7, wobei die Durchperlungskammern (52a, 52b, 52c, 52d) weiter eine Anti-Spritzvorrichtung (64) aufweisen.

9. Vorrichtung nach Anspruch 8, wobei die Anti-Spritzvorrichtung (64) mit der Blasenbrechvorrichtung (58) mittels mindestens eines Korbes und Haltestangen (61) fest verbunden ist.

10. Vorrichtung nach einem der Ansprüche 3 bis 9, weiter aufweisend: Ablaufrinnen (73), die ausgebildet sind, um die gegebene Flüssigkeit (26) in die Überlauftröge (72a, 72b) abzuleiten, wenn das Flüssigkeitsniveau die gegebene vorbestimmte Höhe erreicht.

11. Vorrichtung nach einem der Ansprüche 3 bis 10, weiter aufweisend Trennwände (55a, 55b), die sich zu beiden Seiten der Einheit aus Durchperlungskammern (52a, 52b, 52c, 52d) und innenliegenden Kammern (54a, 54b, 54c, 54d, 54e) angeordnet sind, wobei jede dieser Trennwände in die Flüssigkeit (26) eingetaucht ist und sich zwischen einer innenliegenden Kammer (54a) und einem Eintritt eines der Überlauftröge (72a) befindet.

12. Vorrichtung nach einem der Ansprüche 3 bis 11, wobei eine der Wände Öffnungen (552) im oberen Teil auf der Seitenfläche der Platte (55a) aufweist.

13. Vorrichtung nach einem der Ansprüche 1 bis 12, weiter aufweisend ein System zur Regelung der Niveaus von Flüssigkeit (80) in dem Behälter, wobei das Regelungssystem mit einem Kreislauf zur Speisung des Behälters mit Flüssigkeit (26) versehen ist.

14. Vorrichtung nach Anspruch 13, wobei das Regelungssystem mit einem Schwimmerventil ausgerüstet ist, wobei die Öffnung des Schwimmerventils 140 ermöglicht, den Behälter (28) mit Flüssigkeit zu versorgen.

15. Vorrichtung nach Anspruch 14, wobei die Flüssigkeitsspeisung mittels einer vom Regelungssystem unabhängigen Zwangsspeisung realisiert wird.

## Claims

1. Device for limiting (10, 11) the consequences of a fire for limiting the overpressure and depression phenomena when a fire develops in a room (4), the device comprising a reservoir (28) provided with a vessel (29) containing a liquid (26), said reservoir (28) comprising one or more chambers referred to as "internal chamber or chambers" (54a, 54b, 54c, 54d, 54e) in communication with said room and one or more other chambers (52a, 52b, 52c, 52d, 53) of the reservoir, the reservoir being arranged such that the internal chambers
communicate with one or more of said other chambers and such that a gas flow, generated in particular by pressure phenomena caused by the fire and exchanged between on ore plural internal chamber(s) and one or several of said other chambers, is intended to pass through the liquid contained in the vessel, the device being **characterised in that** the reservoir (28) comprises at least a first overflow tank (72a) and at least a second overflow tank (72b), both integral, placed on either side of the reservoir (28), each tank being able to receive said liquid (26) when the latter exceeds a predetermined given height in said vessel (29).

2. The device according to claim 1, the room (4) being a storage cell installed in a confinement enclosure (2), said other chambers (52a, 52b, 52c, 52d, 52d) being in communication with said confinement enclosure (2).

3. Device according to claim 2, said other chambers in communication with the confinement enclosure comprising one or more so-called "bubbling" chambers (52a, 52b, 52c, 52d).

4. Device according to claim 3, said bubbling chambers (52a, 52b, 52c, 52d) communicating with a so-called "retardation" chamber (53) situated in an upper part of the reservoir (28) and communicating with the confinement enclosure by means of one or more openings (36).

5. Device according to claim 4, the "retardation" (53) chamber comprising a droplet catcher (63).

6. Device according to any of the claims 3 to 5, the bubbling chambers (52a, 52b, 52c, 52d) being separated from the internal chambers (54a, 54b, 54c, 54d, 54e) by means of separation elements (50) arranged orthogonally, at the bottom of the reservoir (32), said separation elements (50) being equipped with wave-breaker devices (56), formed by plates fixed on bottom ends of the separation elements (50) and which are oriented towards the inside of at least one bubbling chamber (52).

7. Device according to any of the claims 3 to 6, the bubbling chambers (52a, 52b, 52c, 52d) comprising a bubble splitting device (58).

8. Device according to any of the claims 3 to 7, the bubbling chambers (52a, 52b, 52c, 52d) also comprising an anti-splatter device (64).

9. Device according to claim 8, wherein the anti-splatter device (64) is kept secured to the bubble splitting device (58) by means of at least one basket and holding rods (61).

10. Device according to any of the claims 3 to 9, further comprising: channels (73) able to pour said given liquid (26) into the overflow tanks (72a, 72b) when its level reaches the predetermined given height.

11. Device according to any of the claims 3 to 10, further comprising separation walls (55a, 55b) situated on either side of all the bubbling chambers (52a, 52b, 52c, 52d) and internal chambers, each of said separation walls being immersed in the liquid and being situated between an internal chamber (54a, 54b, 54c, 54d, 54e) and an inlet of one of the overflow tanks.

12. Device according to any of the claims 3 to 11, one of said walls comprising orifices (552) in the upper part on the lateral face of the plate (55b).

13. Device according to any of the claims 1 to 12, further comprising a system for regulating the liquid (80) levels in the reservoir, said regulation system being provided with a circuit for supplying the reservoir with liquid (26).

14. Device according to claim 13, the regulation system being provided with a float valve (140), the opening of said float valve supplying liquid to said reservoir (28).

15. Device according to claim 14, the supply of liquid being achieved by a forced supply independent of the regulation system.
